# FASCICULE DE BREVET EUROPEEN

(11) **EP 3 095 715 B1**
(45) Date de publication et mention de la délivrance du brevet: **31.10.2018**
(21) Numéro de dépôt: 16169659.6
(22) Date de dépôt: 13.05.2016
(51) Int. Cl.: B64G 5/00, F16L 55/00

(54) **MODULE DE RACCORDEMENT D'AVITAILLEMENT POUR LANCEUR SPATIAL**
VERSORGUNGS-ANSCHLUSSMODUL FÜR TRÄGERRAKETE
REFUELLING CONNECTION MODULE FOR SPACE LAUNCHER

(30) Priorité: 18.05.2015 BE 201505305
(43) Date de publication de la demande: 23.11.2016
(73) Titulaire: Safran Aero Boosters SA, 4041 Herstal (BE)
(72) Inventeur: Delcommune, Julien, 4050 Chaudfontaine (BE)
(74) Mandataire: Lecomte & Partners

(56) Documents cités:
- EP-A1- 3 224 144
- WO-A1-2016/083713
- FR-A1- 2 639 610
- FR-A1- 2 685 903
- FR-A1- 2 943 627

## Description

### Domaine technique

L'invention porte sur un module de raccordement pour l'avitaillement d'un lanceur. Plus précisément, l'invention concerne un module de raccordement pour l'avitaillement de lanceur avec une pièce de liaison mécanique. L'invention traite également d'une méthode pour scinder une pièce de liaison de module de raccordement pour l'avitaillement pour lanceur.

### Technique antérieure

Le moteur d'un lanceur spatial utilise généralement de l'ergol liquide pour sa propulsion. Ce carburant cryogénique est stocké dans un réservoir relié aux installations du pas de tir jusqu'au décollage. L'alimentation s'effectue à l'aide d'un dispositif d'accouplement et de déconnexion muni de plusieurs canalisations pour l'écoulement du carburant, du comburant et d'autres fluides tels que les gaz de commande. Ces liaisons entre autres permettent bien entendu le remplissage de réservoirs, une vidange, l'alimentation des organes de commande, l'assainissement du lanceur. En effet, certains scénarios d'annulation de tir imposent de vider un réservoir car le carburant présente un caractère instable.

La liaison est solidaire d'une platine sol et d'une platine vol du dispositif. Elle se scinde en deux portions qui restent accrochées soit à la platine sol soit à la platine vol. Sa division par rupture est provoquée par un mécanisme exerçant un effort de traction axiale.

Le document FR2639610 A1 divulgue un dispositif de remplissage des propulseurs cryogéniques d'un lanceur, le dispositif se séparant automatiquement lors du décollage du lanceur. Le dispositif comprend une canalisation embarquée et une canalisation au sol. Celle-ci comporte un tube montrant une zone fragilisée sur laquelle prennent appui des jambes de force. Lors du décollage du lanceur, un manchon actionne les jambes de force vers le tube. Elles exercent alors un effort de traction axiale sur le tube provoquant la rupture de la zone fragilisée. Le tube se retrouve scindé en deux parties, chacune restant solidaire de la partie sol ou de la partie embarquée du dispositif. Un tel dispositif permet un remplissage du lanceur jusqu'au dernier moment du décollage. Cependant, la fiabilité de la rupture reste limitée malgré un mécanisme complexe.

Le document FR2943627A1 divulgue un lanceur avec un dispositif de séparation des parties Bord et Sol d'un module d'avitaillement de lanceur. Le dispositif de séparation comprend un système de verrouillage comportant un doigt de verrouillage monté sur la partie Sol et présentant une portion de blocage. Un axe de verrouillage sur la partie Bord, coopère par engagement avec la portion de blocage afin de maintenir la partie Bord et la partie Sol dans une position de verrouillage. Le dispositif de séparation comprend en outre un système d'actionnement qui, sous le déplacement vertical du lanceur permet de désengager la portion de blocage de l'axe de verrouillage, ce par quoi la partie Bord est apte à être séparée de la partie Sol.

Le document EP 3 224 144 divulgue un dispositif d'avitaillement pour une fusée. En vertu de l'art. 54(3) CBE, le contenu de ce document tel qu'il a été déposé est considéré comme compris dans l'état de la technique à prendre en compte au titre de la nouveauté. Ce dispositif comprend deux connecteurs d'avitaillement complémentaires, fixés respectivement sur la fusée ou sur des conduits ombilicaux. Ces connecteurs comprennent un organe de liaison brisable, pouvant également servir de conduite, cet organe reliant les deux connecteurs ensemble pendant l'avitaillement. Suite à sa rupture en torsion causée par un organe de transmission d'efforts, cet organe permet la séparation des connecteurs lors le décollage de la fusée.

### Résumé de l'invention

### Problème technique

L'invention a pour objectif de résoudre au moins un des problèmes posés par l'art antérieur. Plus précisément, l'invention a pour objectif d'améliorer la fiabilité d'un module de raccordement pour l'avitaillement d'un lanceur. L'invention a également pour objectif de diminuer le coût d'un module de raccordement pour avitaillement.

### Solution technique

L'invention a pour objet un module de raccordement selon la revendication 1.

Selon un mode avantageux de l'invention, les moyens de torsion comprennent un levier de déconnexion qui s'étend perpendiculairement par rapport à la liaison et qui est destiné à être retenu par un câble de déconnexion.

Selon un mode avantageux de l'invention, la première jonction forme un rétrécissement.

Selon un mode avantageux de l'invention, l'amorce de rupture comprend une gorge liaison circulaire, éventuellement autour de la liaison.

Selon un mode avantageux de l'invention, la liaison présente deux moitiés selon sa longueur, l'amorce de rupture et les moyens de torsion étant disposés sur la même moitié de la liaison.

Selon un mode avantageux de l'invention, l'amorce de rupture commence au niveau de la surface externe de la partie vol, éventuellement les moyens de torsion affleurent axialement l'amorce de rupture.

Selon un mode avantageux de l'invention, la liaison est pleine.

Selon un mode avantageux de l'invention, la liaison comprend une conduite, préférentiellement le module comprend un passage traversant la partie vol, la partie sol et la conduite.

Selon un mode avantageux de l'invention, la liaison comporte une paroi entourant le passage.

Selon un mode avantageux de l'invention, la liaison comporte une deuxième jonction formant une zone de moindre épaisseur, éventuellement sur la paroi.

Selon un mode avantageux de l'invention, la deuxième jonction est profilée axialement et est éventuellement annulaire, notamment tubulaire, ses extrémités comportent éventuellement des rayons de raccordement.

Selon un mode avantageux de l'invention, la deuxième jonction s'étend axialement sur la majorité de l'épaisseur de la partie sol, éventuellement elle forme la partie principale axialement de la liaison.

Selon un mode avantageux de l'invention, la partie sol comprend une surface d'appui déportée contre laquelle la liaison prend appui, éventuellement via des moyens de fixation.

Selon un mode avantageux de l'invention, au niveau axialement des moyens de torsion, la liaison comprend une surface extérieure avec des motifs configurés pour transmettre le couple de rupture des moyens de torsion à la liaison.

Selon un mode avantageux de l'invention, la liaison comprend deux extrémités opposées, l'une avec des moyens de serrage éventuellement réversibles, l'autre avec une butée axiale.

Selon un mode avantageux de l'invention, les parties comprennent chacune un orifice traversé par la liaison.

Selon un mode avantageux de l'invention, les parties définissent une alvéole que les moyens de torsion occupent.

Selon un mode avantageux de l'invention, la liaison est une liaison fonctionnel à température notamment cryogénique et/ou le module est un module cryogénique ; elle/il est adapté aux températures inférieures à - 100°C, préférentiellement inférieures ou égales à -200°C.

Selon un mode avantageux de l'invention, la liaison est solidaire des parties de sorte à fixer la partie sol et la partie vol l'une par rapport à l'autre, et/ou forme un conduit traversant le module.

Selon un mode avantageux de l'invention, le passage est droit, et/ou de section variable.

Selon un mode avantageux de l'invention, l'amorce de rupture et les moyens de torsion sont disposés sur le même tiers ou sur le même quart axial de la liaison.

Selon un mode avantageux de l'invention, la deuxième jonction s'étend sur ou moins 10% de la longueur de la liaison, préférentiellement sur au moins 25% de la longueur de la liaison, plus préférentiellement sur au moins 50% de la longueur de la liaison.

Selon un mode avantageux de l'invention, la liaison et les moyens de torsion comprennent chacun une portée hexagonale à leur interface

L'invention a également pour objet une méthode de séparation d'un module de raccordement pour l'avitaillement d'un lanceur lors du tir, selon la revendication 10.

Selon un mode avantageux de l'invention, lors de la séparation, la liaison est vrillée selon son axe à l'aide de moyens de torsion, notamment d'un levier, lesdits moyens étant pivotés par rapport à l'axe de la liaison pendant la séparation.

Selon un mode avantageux de l'invention, la liaison est scindée selon un plan préférentiellement perpendiculaire à l'axe, pendant la séparation la matière de la liaison est cisaillée dans le plan de scission et éventuellement selon une direction circonférentielle à l'axe.

Selon un mode avantageux de l'invention, la liaison comprend des portions et une première jonction axiale présentant une masse linéique réduite et/ou une raideur en torsion réduite, lors de la séparation le couple de rupture engendre une concentration de contraintes au niveau de ladite première jonction de sorte à la rompre.

Selon un mode avantageux de l'invention, la précontrainte est une contrainte de traction axiale configurée pour plaquer les parties l'une contre l'autre à l'aide de la liaison.

Selon un mode avantageux de l'invention, la liaison comporte des portions et une deuxième jonction axiale qui présente une raideur axiale réduite et qui est éventuellement profilée axialement ; la contrainte de traction étant supérieure à 5% de la limite élastique du matériau de la deuxième jonction, préférentiellement supérieure à 25%, éventuellement comprise entre 60% et 95% de la limite élastique.

Selon un mode avantageux de l'invention, la liaison comporte au moins une jonction de moindre épaisseur, la précontrainte entraîne un allongement de la liaison, la liaison s'allongeant majoritairement au niveau axialement de la jonction de moindre épaisseur.

Selon un mode avantageux de l'invention, la liaison est une conduite avec une paroi annulaire sur laquelle est éventuellement formée la jonction de moindre épaisseur.

Selon un mode avantageux de l'invention, la jonction de moindre épaisseur est une deuxième jonction, la liaison comprenant en outre une première jonction de moindre épaisseur dont l'épaisseur est supérieure à celle de la deuxième jonction, l'allongement étant majoritairement au niveau de la deuxième jonction, préférentiellement à plus de 80%.

Selon un mode avantageux de l'invention, la liaison comprend une conduite, préférentiellement le module comprend un passage traversant la partie vol, la partie sol et la conduite.

Selon un mode avantageux de l'invention, lors de la séparation du module de raccordement la liaison est rompue en majorité par la torsion axiale, une minorité restante de la liaison étant rompue par arrachement, notamment par traction. Ceci peut être assuré par des ressorts, et/ou des éjecteurs.

Selon un mode avantageux de l'invention, la torsion entraine une rupture de plus de 80% de la liaison, préférentiellement au moins 95% ; les au plus 20% restants, préférentiellement les au plus 5% restants étant rompus par arrachement, notamment par traction.

### Avantages apportés

Le module selon l'invention offre une fiabilité de séparation extrême. En effet, il repose sur un nombre d'éléments réduit, tout comme le nombre de pièces mobiles. Il peut économiser un actionneur puisque l'élévation propre du lanceur agit sur le levier grâce au câble, et provoque la rupture de la liaison.

Puisque la liaison forme la ligne haute pression en conservant une continuité de matière d'une platine à l'autre, et d'une face à l'autre du module, l'étanchéité est optimale. La liaison ou coupée au raz de la platine vol pour rester à fleur de sa surface externe. Ainsi, l'aspect protubérant de la portion vol de la liaison est limité, ce qui préserve l'aérodynamisme et évite qu'un équipement du pas de tir ne s'y raccroche.

La deuxième portion de la liaison, ou portion souple, assure plusieurs fonctions. Elle maintient les platines plaquées l'une contre l'autre, et permet une déformation élastique d'une partie de la liaison. Elle favorise l'étanchéité entre les passages aboutés du module, et peut simplifier leur conception.

Le module permet de maintenir une connexion fluide, et/ou mécanique, et/ou électrique, jusqu'au début du décollage, c'est-à-dire en temps positifs. En cas de tir avorté, les platines restent connectées et en communication fluidique.

L'invention permet de combiner un effort de traction et un effort de torsion au niveau de la liaison. Elle crée une synergie afin d'atteindre d'autant plus facilement la contrainte entrainant la rupture de la liaison. Ce résultat est permis grâce à des jonctions dédiées réagissant de manière spécifique à chacune de ces contraintes.

### Brève description des dessins

La figure 1 représente une base de lancement d'un lanceur selon l'invention.
La figure 2 illustre un module de raccordement pour l'avitaillement de lanceur selon l'invention.
La figure 3 esquisse une liaison de module de raccordement pour l'avitaillement selon l'invention.
La figure 4 montre une portion du module de raccordement pour l'avitaillement selon l'invention.

### Description des modes de réalisation

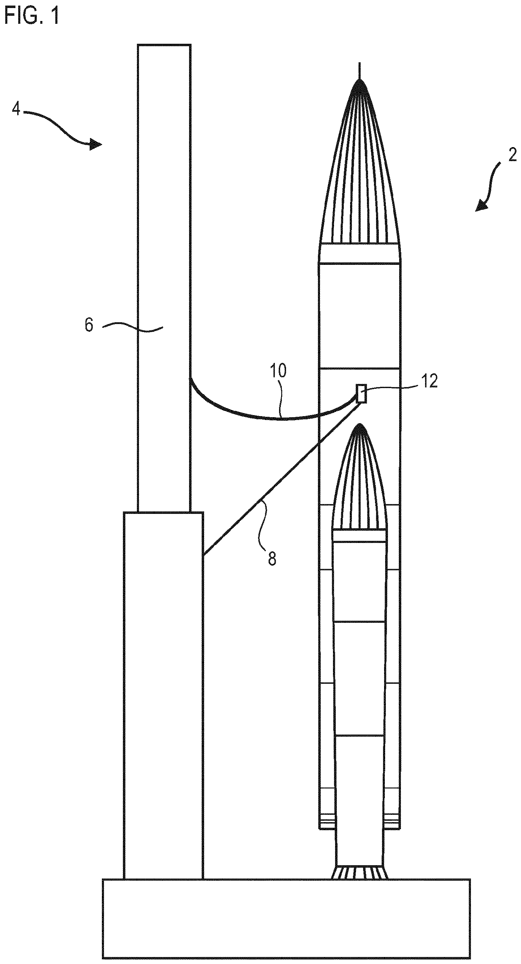

La figure 1 représente de manière simplifiée un lanceur spatial 2 prêt à décoller sur son pas de tir 4 ou base de lancement.

Le pas de tir 4 comprend optionnellement un mât vertical 6. Une série de câbles 8 et une pluralité d'ombilicaux d'alimentation 10 relient le lanceur 2 au mât 6. Les ombilicaux 10 forment des canalisations 10 permettant de remplir les réservoirs du lanceur 2 d'ergol, jusqu'au moment imminent du décollage. Les ombilicaux d'alimentation 10 et les câbles 8 sont reliés au lanceur 2 par l'intermédiaire d'un ou plusieurs module de raccordement 12 permettant une connexion puis une déconnexion automatique. L'état connecté est géré de manière autonome et est fonction de la cinématique du lanceur 2.

Un tel module 12 permet de raccorder le lanceur 2 au mât 6 en permettant une communication fluidique. La connexion reste effective jusqu'au moment du lancement, et éventuellement au début de l'élévation du lanceur 2. La connexion cesse lorsque le lanceur 2 s'élève au-delà d'une certaine valeur, par exemple lorsque l'altitude du lanceur atteint une valeur seuil S1. Un câble de déconnexion 8 relié au mât et au module peut déclencher la déconnexion, la division en deux parties du module 12.

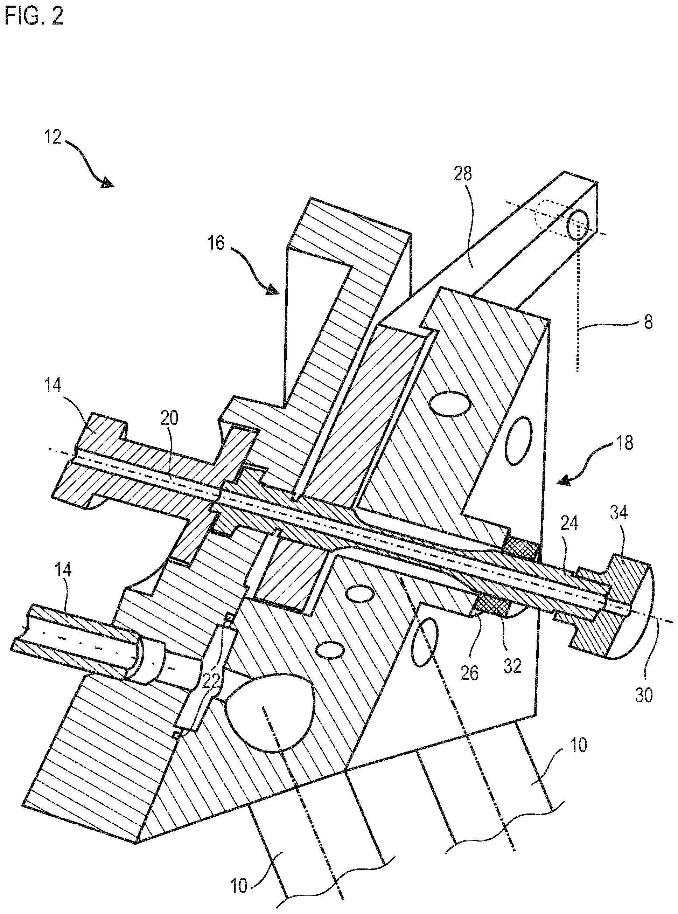

La figure 2 représente une vue en coupe d'un module de raccordement 12 pour l'avitaillement d'un lanceur tel que celui de la figure 1. Des conduites 14 du lanceur, des ombilicaux 10 sont représentés liés au module 12. Le câble de déconnexion 8 est représenté sous la forme d'un trait pointillé.

Le module 12 comprend deux parties, dont une partie vol 16 et une partie sol 18. Chaque partie est un élément, une entité. Les parties (16 ; 18) sont plaquées l'une sur l'autre. La partie sol 18 est du côté des ombilicaux 10 et y est jointe. La partie sol 18 est tournée vers l'exterieur du lanceur. La partie vol 16 est fixée, embarquée sur le lanceur. Après le décollage elle reste à bord. Elle est reliée aux canalisations 14 du lanceur, qui permettent par exemple le remplissage et/ou la vidange du/des réservoir(s) du lanceur.

Les parties (16 ; 18) peuvent être des platines, présentant chacune une face regardant la partie opposées. Les parties (16; 18) permettent la fixation de diverses connexions, c'est-à-dire la connexion d'alimentations. Elles peuvent généralement être des plaques, formant des corps, dont l'épaisseur est traversée par des passages, éventuellement coudés. Les parties (16 ; 18) sont fixées l'une à l'autre, elle présentent en outre des moyens pour reprendre des efforts de cisaillement à leur interface. Par exemple, des clavettes (non représentées) engagées dans des encoches correspondantes permettent de remplir cette fonction.

Les parties sol et vol comprenant éventuellement des moyens d'alimentation en correspondance. Par exemple un orifice peut être en correspondance d'un autre moyen tel une fiche, un orifice, un raccord ou tout autre moyen. Le module permet la connexion d'au moins un passage 20 de fluide, préférentiellement de plusieurs passages 20 de fluides d'une partie à l'autre. Chaque passage 20 communique avec une canalisation sol 10, telle un des ombilicaux 10 ; éventuelleme, le liaison 24 peut être ou comprendre une conduite permettant un passage 20 totalement optionnel selon l'invention. Chaque passage 20 traverse généralement le module de raccordement, et en particulier chaque partie (16 ; 18). Eventuellement un passage 20 relie deux faces distinctes d'une des parties 18. A l'interface des parties, le module peut comprendre des étanchéités 22, tels des joints toriques.

Les parties (16 ; 18) du module 12 sont reliées, préférentiellement fixées l'une à l'autre, grâce à une liaison 24 formant éventuellment un passage 20 du module 12. La liaison 24 peut comprendre des moyens de fixation, tels des moyens de serrage éventuellement réversibles, et/ou une surface de butée tel un épaulement. Les moyens de fixation peuvent chacun coopérer avec l'une des parties (16; 18), notamment en prenant appui dessus. En particulier la partie vol 16 peut comprendre une surface d'appui logée dans son épaisseur, et la partie sol 18 peut présenter une surface d'appui 26 déportée vers l'extérieur. Cette surface 26 peut être distante de l'enveloppe générale de la partie sol 18. Ce déport permet d'allonger axialement la liaison 24, ce qui a pour avantage d'augmenter son élasticité, sa souplesse.

Pour provoquer la rupture de la liaison 24, le module 12 comprend des moyens de torsion 28 de la liaison 24. Les moyens de torsion 28 doivent être solidaires de la liaison 24, notamment en rotation, par exemple grâce à des surfaces correspondantes. Ces surfaces peuvent être emmanchées l'une dans l'autre. Les moyens de torsion 28 peuvent être reliés au câble de déconnexion 8. Un guide câble (non représenté) peut être prévu de manière à orienter l'effort du câble 8 sur les moyens de déconnexion 8 selon une direction prédéterminée.

Ces moyens de torsion 28 permettent d'exercer un couple de torsion selon l'axe 30 d'allongement de la liaison 28, par exemple son axe central et/ou son axe principal. Les moyens de torsion 28 visent à faire pivoter deux portions de la liaison l'une par rapport à l'autre suivant l'axe. Le câble de déconnexion 8 tend à limiter l'altitude d'un point des moyens de torsion 28 en le retenant vers le bas. Ainsi, l'élévation du lanceur conjugée à une rétention des moyens de torsion 28 se traduit par une torsion axiale de la liaison 24 jusqu'à sa rupture.

Les moyens de torsion peuvent comprendre un disque sur lequel est enroulé le câble, et/ou un système d'engrenage. Un pignon peut être formé autour de la liaison . Le pignon peut être entraîné par le câble de déconnexion ou tout actionneur tel un moteur. Les moyens de torsion 28 peuvent être un levier 28, éventuellement avec une extrémité reliée à la liaison 24 de sorte à l'entraîner en rotation. L'autre extrémité de la liaison est reliée au câble de déconnexion 8. Lors du décollage, le levier 28 tend à basculer en exerçant un couple de torsion provoquant la rupture de la liaison 24. Cette dernière se divise, se partage, en réponse à un pivotement interne, un vrillage. Sa matière subit des efforts de cisaillement supérieurs à sa résistance mécanique, éventuellement impactés en raison des conditions cryogéniques. Puisque la liaison 24 est garante de ou participe à la cohésion des parties (16 ; 18) du module de raccordement, sa rupture permet la déconnexion du module, et en particulier la sépation des parties (16 ; 18). L'une 18 reste liée au pas de tir, éventuellement en retombant; l'autre 16 accompagne le lanceur. Des clapets (non représentés) peuvent permettre des fermetures automatiques, éventuellement simultanées, des canalisations (10 ; 14) sol et vol.

Lors de l'assemblage du module de raccordement 12, les parties (16 ; 18) sont plaquées l'une contre l'autre. Elles présentent des orifices traversants qui sont alignés et au travers desquels la liaison 24 est introduite. La liaison 24 peut généralement traverser le module 12. Elle est ensuite serrée pour l'immobiliser, de sorte à ce qu'elle forme un ensemble solidaire avec les parties (16 ; 18) et les moyens de torsion 28. Lors de l'assemblage, la liaison 24 peut devenir et rester contrainte en traction, de sorte à garder les parties (16 ; 18) plaquées l'une contre l'autre avec un effort de plaquage. Cette précontrainte limite les variations d'efforts qu'elle subit, et soigne le contact entre les parties (16 ; 18) malgré les effort de séparation subit par les parties tels que par exemples les vibrations, le poids des lignes ombilicales et la pression interne. Les étanchéités 22 auxquelles contribuent les parties sont préservées. La liaison 24 peut être fixée et contrainte à l'aide d'un écrou 32 serré, et d'un contre-écrou pour maintenir ce dernier. A l'extrémité libre côté sol, la liaison 24 peut comprendre un branchement 34, éventuellement avec un autre contre-écrou.

La canalisation 24 est apte à assurer seule la fixation des parties (16 ; 18) entre elles, tout comme leur plaquage. Toutefois, d'autres fixations, éventuellement auxiliaires, peuvent être prévues. Selon l'invention le module de raccordement 12 peut comprendre plusieurs liaison s 24 permettant de fixer les parties (16; 18) l'une à l'autres, différents passages 20 peuvent y traverser le module 12. Il est également envisagé que les moyens de torsion 28 agissent sur chaque fixation et/ou sur chaque liaison 24 des parties (16 ; 18). Les moyens 28 de torsion peuvent inclure différentes unités dédiées à chaque fixation et/ou à chaque liaison des parties.

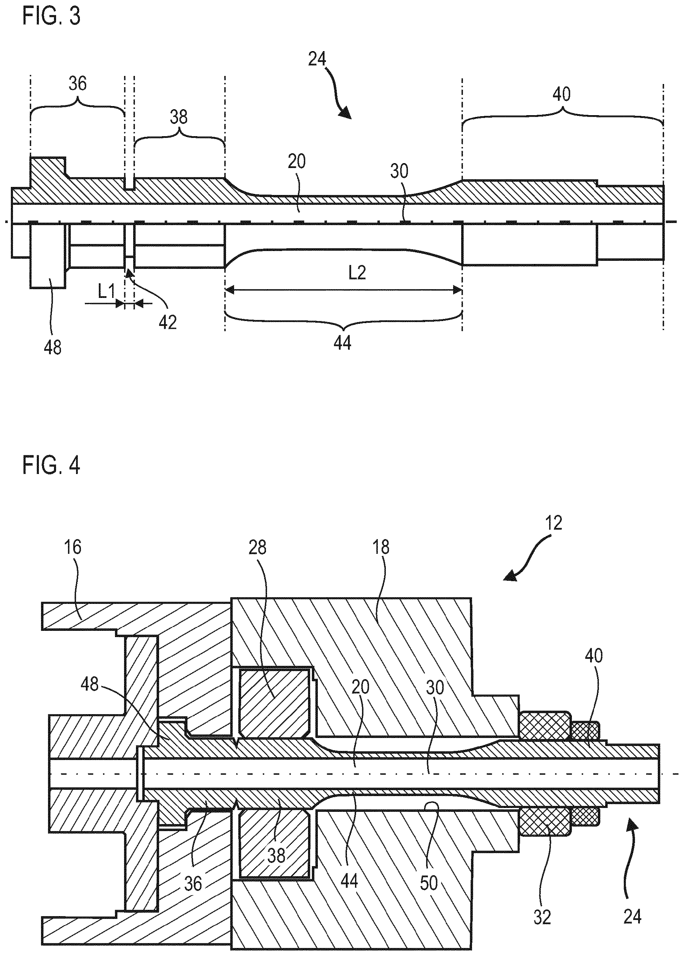

La figure 3 représente la liaison 24 du module de raccordement pour l'avitaillement. Une moitié supérieure est représentée en coupe, l'autre est illustrée latéralement. L'axe 30 de la liaison sépare ces moitiés.

La liaison 24 forme généralement une éprouvette avec une zone étranglée, rétrécie. Un passage 20 peut traverser la liaison 24 de part en part peut présenter un diamètre constant. La liaison 24 comprend une paroi qui entoure l'axe 30, et dont l'épaisseur varie, éventuellement axialement et/ou selon la circonférence. Elle est avantageusement réalisée en métal, et est préférentiellement monobloc et/ou venue de matière. Ces caractéristiques visent à garantir sa résistance mécanique en statique et en dynamique, tout comme son étanchéité malgré l'éventuelle présence de fluides agressifs. Le métal peut être un super-alliage comprenant du nickel et du chrome, par exemple pour bénéficier d'une tenacité élevée dans des conditions cryogéniques. Ainsi, la rupture de la liaison 24 est maîtrisée à la fois en cryogénique, à température ambiante, ou en condition chaude du pas de tir. L'homme du métier est encouragé à développer des matériaux adaptés à cette utilisation.

La liaison 24 comprend au moins deux portions, préférentiellement au moins trois portions (36 ; 38 ; 40). Les portions (36 ; 38 ; 40) sont en contact et/ou coopèrent avec les moyens de torsions et/ou au moins une ou chaque portion. Ces portions (36 ; 38 ; 40) peuvent être des portions principales, par exemple principales selon la largeur mesurée transversalement à l'axe 30.

De gauche à droite sur la figure, on observe une première portion 36, une deuxième portion 38, et une troisième portion 40. Ces portions (36 ; 38 ; 40) sont reliées à l'aide d'au moins une jonction (42 ; 44), préférentiellement plusieurs jonctions (42 ; 44). La deuxième portion 38 est reliée à la première portion 36 via la première jonction 42, et est reliée à la troisième portion 40 grâce à la deuxième jonction 44. Les jonctions (42 ; 44) peuvent matérialiser des réductions de largeur et/ou de diamètre sur la liaison 24.

Avantageusement, la première jonction 42 est une zone fragilisée, telle une zone liaison. Elle peut être une amorce de rupture, telle une entaille localisée, ou une gorge circulaire. Sa longueur axiale L1 est inférieure à 10% de la longueur du liaison. Plus sa longueur L1 est réduite, plus la contrainte en cisaillement est concentrée en cas de torsion, ce qui permet d'atteindre plus rapidement le seuil de rupture. La première jonction 42 peut comprendre au moins un épaulement, préférentiellement deux qui augmentent les concentrations de contraintes. La profondeur radiale de la première jonction 42 est supérieure à 1,00 mm, préférentiellement supérieure ou égale à 2,00 mm, éventuellement supérieure ou égale à 5 mm. Le fond de gorge peut avoir un profil circulaire ou en « V », ou en pointe, dont l'aspect aigu amplifie la concentration de contrainte La deuxième jonction 44 comprend au moins une, préférentiellement deux zones à variations progressives de diamètres, qui forment éventuellement des rayons de raccordement. La longueur axiale L2 de la deuxième jonction 44 peut être au moins vingt fois plus longue que la première jonction 42. Au niveau de la deuxième jonction 44, la paroi de la liaison 24 est plus mince qu'au niveau de la première jonction 42. Ces particularités concourent à rendre la première jonction 42 plus raide en torsion, et à rendre la deuxième jonction 44 plus souple. Ainsi, l'endroit où se produit la rupture en cas de torsion de la liaison est localisé avec précision. Il est plus aisé de sectionner la liaison 24 au niveau de la première jonction 42, au ras de la partie vol. La première jonction comprend une section avec un moment quadratique minimal ou moment d'inertie polaire, qui est le plus faible pour la première jonction. La deuxième jonction comprend une section avec un moment quadratique minimal, qui est le plus faible pour la deuxième jonction. Le premier moment quadratique est supérieur au deuxième moment quadratique. Les moments quadratiques sont selon l'axe 30, et/ou exprimés selon le centre de la section correspondante.

La troisième portion 40 comprend des moyens de serrage 46, et éventuellement des méplats. Elle peut comprendre une portée généralement tubulaire avec un pas de vis. Celui-là assure au moins deux fonctions, à savoir contrôler et régler la précontrainte axiale sur la liaison 24 lors de l'assemblage du module, et brancher une canalisation sol reliée au mât. A l'opposé de la troisième portion 40, la première portion 36 peut présenter ou être prolongée par une butée axiale, tel un épaulement 48 annulaire, qui permet un blocage axial.

La figure 4 représente une portion du module de raccordement 12 centrée sur la liaison 24.

Les surface externes de la première portion 36 et de la deuxième portion 38 de la liaison peuvent être en contact radial de la partie vol 16 et des moyens de torsion 28 respectivement. Ces surfaces externes peuvent comprendre des surfaces de blocage axial et/ou radial. La deuxième jonction 44 peut être séparée de la surface interne 50 de l'orifice de la partie sol 18, libérant un éventuel mouvement entre la troisième portion 40 et la partie sol 18. Un jeu mécanique peut être prévu entre la surface interne 50 de l'orifice de la partie sol 18 et la troisième portion 40, si bien que celle-ci peut être essentiellement reliée à la partie sol par l'intermédiaire de l'écrou 32. Les frottements entre la surface interne 50 et la liaison 24 sont réduits, le réglage et la maîtrise de la contrainte de traction de la liaison est plus précis.

La première portion 36 et/ou la deuxième portion 38 comprennent chacune une surface externe avec des motifs. Ces motifs permettent un blocage en rotation autour de l'axe 30, ce qui permet d'exercer un couple sur l'une d'elle, en l'occurrence la deuxième portion 38, tout en retenant la première portion 36 dans la partie vol 16 qui forme une zone d'ancrage. Le couple de torsion axiale est exercé sur la deuxième portion 38 grâce aux moyens de torsion 28, et chemine via la surface externe.

Lors du serrage de la liaison 28, les parties sol 18 et vol 16 du module 12 sont pressées l'une contre l'autre, entre l'écrou 32 et l'épaulement 18. En parallèle, la liaison 24 s'allonge, majoritairement au niveau de la deuxième jonction 44 en raison de son allégement. La liaison 24 devient un ressort, en particulier sa deuxième jonction 44, qui tire les parties (16 ; 18) l'une vers l'autre.

## Revendications

1. Module de raccordement (12), notamment pour l'avitaillement d'un lanceur, le module comprenant :
- une partie sol (18) destinée à être reliée à une ou plusieurs canalisations (10) de pas de tir (4) du lanceur (2) ;
- une partie vol (16) destinée à être placée entre la partie sol (18) et le lanceur (2), les parties sol et vol comprenant éventuellement des moyens d'alimentation en correspondance ;
- au moins une liaison (24) qui est allongée suivant un axe (30) et qui est jointe aux parties (16 ; 18) de sorte à les solidariser au moins axialement ;
le module comprenant en outre
des moyens de torsion (28) de la liaison (24)
adaptés pour pouvoir exercer un couple de rupture sur la liaison (24) selon son axe (30)
de sorte à diviser la liaison (24) afin de pouvoir libérer la partie vol (16) de la partie sol (18),
la liaison (24) comportant une première jonction (42) formant une amorce de rupture et une deuxième jonction (44) formant une zone de moindre épaisseur, la première jonction (42) comprend un moment quadratique minimal qui est supérieur au moment quadratique minimal de la deuxième jonction.

2. Module (12) selon la revendication 1, **caractérisé en ce que** les moyens de torsion (28) comprennent un levier de déconnexion (28) qui s'étend perpendiculairement par rapport à la liaison (24) et qui est destiné à être actionné par un câble de déconnexion (8).

3. Module (12) selon l'une des revendications 1 à 2, **caractérisé en ce que** la première jonction (42) forme un rétrécissement.

4. Module (12) selon l'une des revendications 1 à 3, **caractérisé en ce que** la liaison (24) présente deux moitiés selon sa longueur, l'amorce de rupture et les moyens de torsion (28) étant disposés sur la même moitié de la liaison (24).

5. Module (12) selon l'une des revendications 1 à 4, **caractérisé en ce que** la liaison comprend une conduite, préférentiellement le module comprend un passage traversant la partie vol, la partie sol et la conduite.

6. Module (12) selon la revendication 5, **caractérisé en ce que** la liaison (24) comprend une paroi entourant le passage et la zone de moindre épaisseur de la deuxième jonction (44) est formée sur la paroi.

7. Module (12) selon la revendication 6, **caractérisé en ce que** la deuxième jonction (44) s'étend axialement sur la majorité de l'épaisseur de la partie sol (18), éventuellement elle forme la partie principale axialement de la liaison (24).

8. Module (12) selon l'une des revendications 1 à 7, **caractérisé en ce qu'**au niveau axialement des moyens de torsion (28), la liaison (24) comprend une surface extérieure avec des motifs configurés pour transmettre le couple de rupture des moyens de torsion (28) à la liaison (24).

9. Module (12) selon l'une des revendications 1 à 8, **caractérisé en ce que** la liaison (24) comprend deux extrémités opposées, l'une avec des moyens de serrage (32) éventuellement réversibles, l'autre avec un moyen de blocage axial, éventuellement une butée axiale (48).

10. Méthode de séparation d'un module de raccordement (12) pour l'avitaillement d'un lanceur (2) lors du tir, le module comprenant :
- une partie vol (16) fixée au lanceur (2),
- une partie sol (18) à l'opposé du lanceur (2) par rapport à la partie vol (16), les parties sol et vol comprenant éventuellement des moyens d'alimentation en correspondance,
- une liaison (24) qui est allongée suivant un axe (30) et qui est jointe aux parties (16 ; 18) de sorte à les solidariser, la liaison (24) comportant des portions (36 ; 38 ; 40), une première jonction axiale (42) et une deuxième jonction axiale (44) qui présente une masse linéique réduite ;
lors de la séparation du module de raccordement (12) la liaison (24) est rompue de sorte à pouvoir libérer la partie vol (16) de la partie sol (18) ;
lors de la séparation du module de raccordement (12) la liaison (24) est rompue par torsion axiale, notamment en y exerçant un couple de torsion générant une contrainte de cisaillement jusqu'à sa rupture, et
avant la séparation du module de raccordement (12), la liaison (24) est maintenue dans état précontraint mécaniquement, la précontrainte consistant en une contrainte de traction supérieure à 5% de la limite élastique du matériau de la deuxième jonction (44).

11. Méthode selon la revendication 10, **caractérisée en ce que** lors de la séparation, la liaison (24) est vrillée selon son axe (30) à l'aide de moyens de torsion (28), notamment d'un levier, lesdits moyens (28) étant pivotés par rapport à l'axe (30) de la liaison (24) pendant la séparation.

12. Méthode la revendication 10, **caractérisée en ce que** la deuxième jonction axiale (44) est profilée axialement ; la contrainte de traction étant supérieure à 25% de la limite élastique du matériau de la deuxième jonction (44), éventuellement comprise entre 60% et 90% de la limite élastique.

13. Méthode selon l'une des revendications 10 à 12, **caractérisée en ce que** lors de la séparation du module de raccordement (12) la liaison (24) est rompue en majorité par la torsion axiale, une minorité restante de la liaison (24) étant rompue par arrachement, notamment par traction.

## Patentansprüche

1. Anschlussmodul (12), insbesondere zur Versorgung einer Trägerrakete, wobei das Modul umfasst:
- ein Bodenteil (18), das zum Verbinden mit einer oder mehreren Leitungen (10) der Abschussbasis (4) der Trägerrakete (2) bestimmt ist;
- ein Flugteil (16), das zur Platzierung zwischen dem Bodenteil (18) und der Trägerrakete (2) bestimmt ist, wobei das Boden- und das Flugteil eventuell jeweilige Versorgungsmittel umfassen;
- mindestens ein Verbindungsstück (24), das sich entlang einer Achse (30) erstreckt und das derart mit den Teilen (16; 18) verbunden ist, dass es sie mindestens axial miteinander verbindet;
wobei das Modul weiter Verdrehungsmittel (28) zum Verdrehen des Verbindungsstücks (24) umfasst, die dafür ausgelegt sind, ein Bruchdrehmoment auf das Verbindungsstück (24) entlang dessen Achse (30) anzulegen,
um das Verbindungsstück (24) zu zerteilen, um das Flugteil (16) von dem Bodenteil (18) zu lösen,
wobei das Verbindungsstück (24) eine erste Verbindungsstelle (42), die eine vorgegebene Sollbruchstelle bildet, und eine zweite Verbindungsstelle (44), die eine Zone mit verringerter Dicke bildet, umfasst, wobei die erste Verbindungsstelle (42) ein Mindest-Flächenträgheitsmoment aufweist, das größer als das Mindest-Flächenträgheitsmoment der zweiten Verbindungsstelle (44) ist.

2. Modul (12) nach Anspruch 1, **dadurch gekennzeichnet, dass** die Verdrehungsmittel (28) einen Entkopplungshebel (28) umfassen, der sich in Bezug zu dem Verbindungsstück (24) senkrecht erstreckt und der zur Betätigung durch ein Entkopplungskabel (8) bestimmt ist.

3. Modul (12) nach einem der Ansprüche 1 bis 2, **dadurch gekennzeichnet, dass** die erste Verbindungsstelle (42) eine Verengung bildet.

4. Modul (12) nach einem der Ansprüche 1 bis 3, **dadurch gekennzeichnet, dass** das Verbindungsstück (24) über seine Länge zwei Hälften aufweist, wobei die vorgegebene Sollbruchstelle und die Verdrehungsmittel (28) auf derselben Hälfte des Verbindungsstücks (24) angeordnet sind.

5. Modul (12) nach einem der Ansprüche 1 bis 4, **dadurch gekennzeichnet, dass** das Verbindungsstück eine Leitung umfasst; bevorzugt umfasst das Modul einen Durchgang, der das Flugteil, das Bodenteil und die Leitung durchquert.

6. Modul (12) nach Anspruch 5, **dadurch gekennzeichnet, dass** das Verbindungsstück (24) eine Wand umfasst, die den Durchgang (20) umgibt, und dass die zweite Verbindungsstelle (44) eine Zone mit verringerter Dicke an der Wand bildet.

7. Modul (12) nach Anspruch 6, **dadurch gekennzeichnet, dass** die zweite Verbindungsstelle (44) sich axial über den Großteil der Dicke des Bodenteils (18) erstreckt; eventuell bildet sie axial den Hauptteil des Verbindungsstücks (24).

8. Modul (12) nach einem der Ansprüche 1 bis 7, **dadurch gekennzeichnet, dass** axial in Höhe der Verdrehungsmittel (28) das Verbindungsstück (24) eine Außenfläche mit einem Muster umfasst, das dafür ausgelegt ist, das Bruchdrehmoment von den Verdrehungsmitteln (28) auf das Verbindungsstück (24) zu übertragen.

9. Modul (12) nach einem der Ansprüche 1 bis 8, **dadurch gekennzeichnet, dass** das Verbindungsstück (24) zwei entgegengesetzte Enden umfasst, ein Ende mit Spannmitteln (32), die bevorzugt umkehrbar sind, das andere Ende mit einem axialen Anschlagmittel, bevorzugt einem axialen Anschlag (48).

10. Verfahren zum Trennen eines Anschlussmoduls (12) zur Versorgung einer Trägerrakete (2) während des Abhebens, wobei das Modul umfasst:
- ein an der Trägerrakete (2) befestigtes Flugteil (16),
- ein Bodenteil (18), das der Trägerrakete (2) in Bezug auf das Flugteil (16) entgegengesetzt ist, wobei das Boden- und das Flugteil eventuell jeweilige Versorgungsmittel umfassen,
- ein Verbindungsstück (24), das sich entlang einer Achse (30) erstreckt und das derart mit den Teilen (16; 18) verbunden ist, dass es sie miteinander verbindet, wobei das Verbindungsstück (24) Abschnitte (36; 38; 40), eine erste axiale Verbindungsstelle (42) und eine zweite axiale Verbindungsstelle (44), die eine reduzierte lineare Masse aufweist, umfasst;
wobei während des Trennens des Anschlussmoduls (12) das Verbindungsstück (24) auseinandergebrochen wird, um das Flugteil (16) von dem Bodenteil (18) zu lösen;
wobei während des Trennens des Anschlussmoduls (12) das Verbindungsstück (24) durch axiale Spannung zerbrochen wird, insbesondere durch darauf Anlegen eines Verdrehungsmoments, das Scherspannung erzeugt, bis es bricht, und
wobei vor dem Trennen des Anschlussmoduls (12) das Verbindungsstück (24) in einem mechanisch vorgespannten Zustand gehalten wird, wobei die Vorspannung eine axiale Zugspannung ist, die größer als 5% der Elastizitätsgrenze des Materials der zweiten Verbindungsstelle (44) ist.

11. Verfahren nach Anspruch 10, **dadurch gekennzeichnet, dass** während des Trennens das Verbindungsstück (24) entlang seiner Achse (30) mithilfe von Verdrehungsmitteln (28), bevorzugt eines Hebels, verdreht wird, wobei diese Mittel (28) während des Trennens in Bezug zu der Achse (30) des Verbindungsstücks (24) geschwenkt werden.

12. Verfahren nach einem der Ansprüche 10 oder 11, **dadurch gekennzeichnet, dass** das zweite axiale Verbindungsstück (44) axial mit einem Profil versehen ist; wobei die Zugspannung größer als 25% der Elastizitätsgrenze des Materials des zweiten Verbindungsstücks (44) ist und bevorzugt zwischen 60% und 90% der Elastizitätsgrenze liegt.

13. Verfahren nach einem der Ansprüche 10 bis 12, **dadurch gekennzeichnet, dass** bei dem Trennen des Anschlussmoduls (12) das Verbindungsstück (24) in erster Linie durch axiales Verdrehen zerbrochen wird, wobei ein restlicher Anteil des Verbindungsstücks (24) durch Abreißen, insbesondere durch Traktion, zerbrochen wird.

## Claims

1. Connection module (12), particularly for fuelling a launch vehicle, the module comprising:
- a ground part (18) intended to be linked to one or more lines (10) of the spaceport (4) of the launch vehicle (2);
- a flight part (16) intended to be placed between the ground part (18) and the launch vehicle (2), the ground and flight parts possibly comprising respective supply means;
- at least one link (24) which is extended along an axis (30) and which is attached to the parts (16 ; 18) in such a manner as to unite them, at least axially;
the module further comprising twisting means (28) for twisting the link (24), which are adapted to apply a breaking torque to the link (24) along its axis (30), such as to break apart the link (24) in order to release the flight part (16) from the ground part (18),
the link (24) comprising a first joint (42) forming a predetermined breaking point and a second joint (44) forming a zone of reduced thickness, the first joint (42) having a minimum moment of inertia that is greater than the minimum moment of inertia of the second joint (44).

2. Module (12) according to Claim 1, **characterized in that** the twisting means (28) comprise a disconnection lever (28) which extends perpendicularly with respect to the link (24) and which is intended to be actuated by a disconnection cable (8).

3. Module (12) according to one of Claims 1 to 2, **characterized in that** the first joint (42) forms a narrowing.

4. Module (12) according to one of Claims 1 to 3, **characterized in that** the link (24) exhibits two halves along its length, the predetermined breaking point and the twisting means (28) being disposed on the same half of the link (24).

5. Module (12) according to one of Claims 1 to 4, **characterized in that** the link comprises a conduit; the module preferably comprises a passage crossing the flight part, the ground part and the conduit.

6. Module (12) according to claim 5, **characterized in that** the link (24) comprises a wall surrounding the passage (20) and **in that** the second joint (44) forms a zone of reduced thickness on the wall.

7. Module (12) according to Claim 6, **characterized in that** the second joint (44) extends axially over most of the thickness of the ground part (18); it possibly forms the main part of the link (24) axially.

8. Module (12) according to one of Claims 1 to 7, **characterized in that** axially at the level of the twisting means (28), the link (24) comprises an outer surface with a pattern configured to transmit the breaking torque from the twisting means (28) to the link (24).

9. Module (12) according to one of Claims 1 to 8, **characterized in that** the link (24) comprises two opposite ends, one end with tightening means that are preferably reversible (32), the other end with an axial stopping means, preferably an axial stop (48).

10. Separation method of a connection module (12) for fuelling a launch vehicle (2) during lift-off, said module comprising:
- a flight part (16) fixed to the launch vehicle (2),
- a ground part (18) opposite the launch vehicle (2) with respect to the flight part (16), the ground and flight parts possibly comprising respective supply means,
- a link (24) which extends along an axis (30) and which is attached to the parts (16 ; 18) in such a manner as to unite them, the link (24) comprising portions (36 ;38 ; 40), a first axial joint (42) and a second axial joint (44) having a reduced linear mass;
wherein during separation of the connection module (12), the link (24) is broken apart in order to release the flight part (16) from the ground part (18) ;
wherein during separation of the connection module (12), the link (24) is broken apart by axial stress, particularly by applying a twisting torque to it, generating shear stress until it breaks, and
prior to the separation of the connection module (12), the link (24) is kept in a mechanically prestressed condition, the prestress being an axial tensile stress greater than 5% of the elastic limit of the material of the second joint (44).

11. Method according to Claim 10, **characterized in that** during separation the link (24) is twisted along its axis (30) with the help of twisting means (28), preferably a lever, said means (28) being pivoted with respect to the axis (30) of the link (24) during the separation.

12. Method according to one of Claims 10 or 11, **characterized in that** the second axial joint (44) is profiled axially; the tensile stress being greater than 25% of the elastic limit of the material of the second joint (44), preferably lying between 60% and 90% of the elastic limit.

13. Method according to one of Claims 10 to 12, **characterized in that** upon separation of the connection module (12), the link (24) is broken primarily by axial twisting, a remaining minority of the link (24) being broken by wrenching, particularly by traction.
